# EUROPÄISCHE PATENTSCHRIFT

(11) **EP 1 171 719 B1**
(45) Veröffentlichungstag und Bekanntmachung des Hinweises auf die Patenterteilung: **02.04.2003**
(21) Anmeldenummer: 00912526.1
(22) Anmeldetag: 29.02.2000
(51) Int. Cl.: F16C 29/02, F16C 32/06

(54) **HYDROSTATISCHE LAGERVORRICHTUNG**
HYDROSTATIC BEARING DEVICE
DISPOSITIF DE PALIER HYDROSTATIQUE

(30) Priorität: 17.04.1999 DE 19917516
(43) Veröffentlichungstag der Anmeldung: 16.01.2002
(73) Patentinhaber: Deckel Maho Seebach GmbH, 99846 Seebach (DE)
(72) Erfinder: LASCH, Thorsten, D-99880 Aspach (DE)
(74) Vertreter: Patentanwälte Dipl.-Ing. Bodo Thielking Dipl.-Ing. Otto Elbertzhagen
(86) Internationale Anmeldenummer: EP0001677
(87) Internationale Veröffentlichungsnummer: WO00063571

(56) Entgegenhaltungen:
- DE-A- 3 202 188
- DE-A- 3 339 316
- FR-A- 2 318 001
- FR-A- 2 606 473
- US-A- 4 753 311

## Beschreibung

### TECHNISCHES GEBIET

Die Erfindung betrifft eine hydrostatische Lagervorrichtung nach dem Oberbegriff des Patentanspruchs 1.

### STAND DER TECHNIK

Bei einer bekannten hydrostatischen Lagervorrichtung nach dem Oberbegriff des Patentanspruchs 1 (US 4,753,311) wird der Flüssigkeitsraum ständig über einen Zufluß aufgefüllt und die Leckagemengen werden ständig außerhalb einer den Flüssigkeitsraum umschließenden Dichtung abgeführt. Mit der bekannten Lösung sind nur vergleichsweise geringe Vorschubgeschwindigkeiten möglich. Bei höheren Vorschubgeschwindigkeiten führt die an einer gegenüberliegenden Gleitfläche anliegende große Dichtungsfläche zur Bildung eines hydrodynamischen Spalts und zu extrem großen Leckagemengen. Die extrem großen Leckagemengen haben zur Folge, daß die bekannte Lagervorrichtung ständig von einer Druckquelle, üblicherweise von einer Hochdruckpumpe mit Druckflüssigkeit versorgt werden muß. Dabei muß jeder Druckflüssigkeitsraum einer jeden von ggf. mehreren vorhandenen Druckkammern über eine hydraulisch getrennte Zuleitung gespeist werden. Auch das Auffangen der abströmenden Druckflüssigkeit ist aufwendig.

### DIE ERFINDUNG

Ausgehend von diesem Stand der Technik liegt der Erfindung die Aufgabe zugrunde, eine einfach aufgebaute, preisgünstig herstellbare und mit geringen Betriebskosten betreibbare hydrostatische Lagervorrichtung zu schaffen, welche die vorstehend erwähnten Nachteile bekannter hydrostatischer Lagervorrichtungen nicht aufweist.

Die Lösung der Aufgabe erfolgt mit den Merkmalen des Patentanspruchs 1.

Das Vorsehen einer Dichtung, die mit einem extrem kleinen, nämlich schneidenförmigen Kontaktbereich an der gegenüberliegenden Gleitfläche des anderen Maschinenbereichs anliegt, hat verschiedene Vorteile: Die keilförmige Schneidenform ermöglicht nicht nur wesentlich höhere Vorschubgeschwindigkeiten als bei den bekannten Lösungen, sie reduziert auch die Leckagemengen zwischen Dichtung und Gleitfläche so wesentlich, daß man auf einen ständigen Druckmittelzufluß, wie er beim Stand der Technik unerläßlich ist, verzichten kann. Zur Aufrechterhaltung des Drucks im Flüssigkeitsraum genügt das Vorsehen eines beim Stand der Technik fehlenden Druckspeichers.

Die Gestaltung der Dichtung läßt es zu, daß die Zeitabstände für das Nachfüllen des Druckraums so groß werden, daß der Nachfüllvorgang die Gebrauchsfähigkeit der Lagervorrichtung nicht beeinträchtigt. Die Lagervorrichtung kann kompakt aufgebaut werden und kleine Außenabmessungen besitzen, so daß sie auch bei engen Raumverhältnissen eingesetzt werden kann.

Bevorzugte Ausgestaltungen der Erfindung ergeben sich aus den Unteransprüchen.

### KURZBESCHREIBUNG DER ZEICHNUNGSABBILDUNG

Nachstehend wird eine bevorzugte Ausführungsform der Erfindung anhand der Zeichnungen im einzelnen beschreiben. Es zeigen:
- Figur 1 -: einen Querschnitt durch zwei einander entgegengerichtete hydrostatische Lagervorrichtungen;
- Figur 2 -: einen Schnitt durch die Lagervorrichtung gemäß Schnittlinie II - II in Fig. 1.

### BESTER WEG ZUR AUSFÜHRUNG DER ERFINDUNG

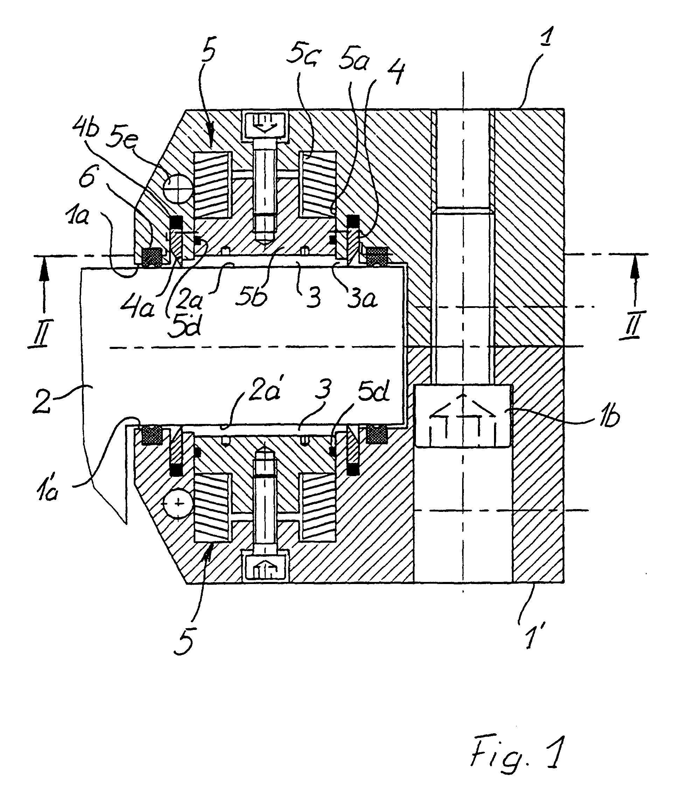

In Fig. 1 sind zwei in ihrer Wirkung einander entgegengerichtete Lagervorrichtungen in zwei ersten Maschinenbereichen 1 und 1' angeordnet, die mittels Schrauben 1b zu einem Führungsschuh zusammengefaßt sind. Der Führungsschuh umgreift einen als Führungsleiste ausgebildeten zweiten Maschinenbereich 2. Die Führungsleiste kann an einem Maschinengestell fest angeordnet sein, während der Führungsschuh auf der Führungsleiste senkrecht zur Zeichenebene verschieblich ist.

Zwischen dem Maschinenbereich 1 und 1' und dem Maschinenbereich 2 besteht jeweils ein Spalt 3a. Der Spalt 3a wird durch Flächen 1a und 2a bzw. durch Flächen 2a' und 1a' begrenzt.

Die Spalte 3a verhindern eine Berührung der Maschinenbereiche 1 und 1' mit dem Maschinenbereich 2. In den Maschinenbereichen 1 und 1' ist je ein Druckspeicher 5 angeordnet, der die Flüssigkeit in einem Flüssigkeitsraum 3 unter Druck hält. Der Flüssigkeitsraum 3 wird von einer kreisringförmigen Dichtung 4 begrenzt.

Der Druckspeicher 5 weist einen Kolben 5b auf, der in einem Zylinderraum 5a verschieblich geführt und gegenüber dessen Zylinderwand mit einem Kolbenring 5d abgedichtet ist. Der Kolben 5b ist einseitig von einer Druckfeder 5c beaufschlagt, die den Flüssigkeitsdruck erzeugt. Durch den Druckspeicher 5 wird der Flüssigkeitsdruck im Flüssigkeitsraum 3 auch beim Auftreten geringer Flüssigkeitsverluste über einen ausreichend langen Zeitraum aufrechterhalten. Der Flüssigkeitsraum 3 ist absperrbar mit einer Flüssigkeitsspeiseleitung 5e verbunden, über die die durch Leckage verlorene Flüssigkeit ersetzt werden kann.

Die ringförmige Dichtung 4 ist in einem ringfömigen Schlitz im Maschinenbereich 1 bzw. 1' aufgenommen und stütz sich an einem elastischen Element 4b am Boden des Schlitzes ab. Die dem Maschinenbereich 2 zugewandte Seite der Dichtung 4 ist schneidenförmig ausgebildet. Sie bildet den Kontaktbereich 4a mit der Fläche 2a bzw. 2a' des zweiten Maschinenbereichs 2. Durch die Schneidenform des Kontaktbereichs 4a genügt ein geringer Auflagedruck für die Abdichtung des Spaltes 3a. Durch die kleine Kontaktfläche und den geringen Kontaktdruck wird die hydrostatische Wirkung des Lagers nicht nachteilig beeinflußt.

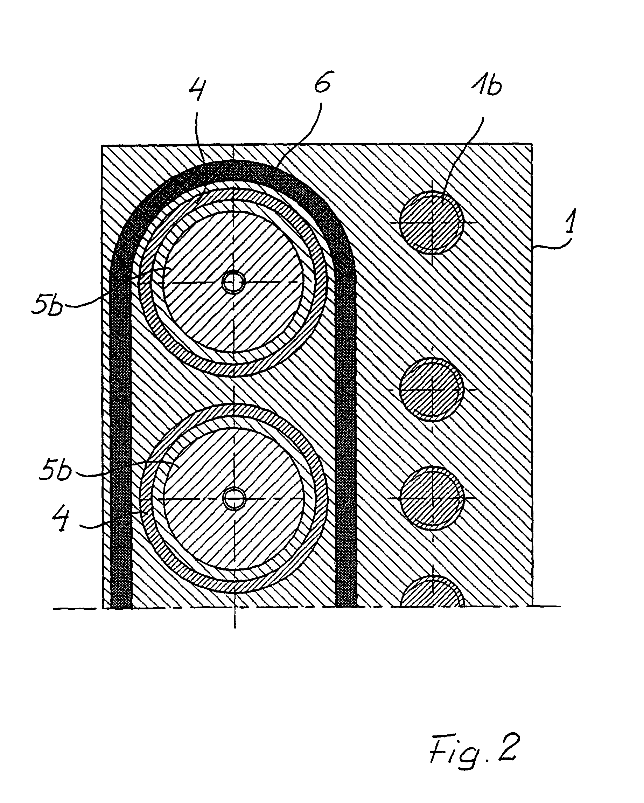

In einer Längsführung sind mehrere Lagervorrichtungen in Vorschubrichtung hintereinander angeordnet, wie in Fig. 2 dargestellt. Sämtliche von den Dichtungen 4 begrenzten Flüssigkeitsräume 3 zwischen den Flächen 1a und 2a bzw. den Flächen 1a' und 2a' werden von einer gemeinsamen zusätzlichen Dichtung 6 umgeben, die das Eindringen von Verunreinigungen in die Spalte 3a und eine Beschädigung der Kontaktbereiche 4a verhindern soll.

## Patentansprüche

1. Hydrostatische Lagervorrichtung für zwei relativ zueinander bewegbare Maschinenbereiche (1; 1'; 2) mit parallel zueinander angeordneten Flächen (1a; 1a'; 2a: 2a'), mit einem Flüssigkeitsraum (3), der von Teilen der beiden unterschiedlichen Maschinenbereiche (1; 1'; 2) begrenzt wird, die einen Spalt (3a) bilden, wobei die Flüssigkeit im Flüssigkeitsraum (3) unter Druck steht, und der Spalt (3a) zwischen den beiden Maschinenbereichen (1; 1'; 2) mittels einer Dichtung (4) abgesperrt wird,
**dadurch gekennzeichnet,**
**daß** die mit einem Maschinenbereich (1; 1') verbundene Dichtung (4) mit einem schneidenförmigen Kontaktbereich (4a) an der gegenüberliegenden Fläche (2a; 2a') des anderen Maschinenbereichs (2) anliegt und der Druck im Flüssigkeitsraum (3) von einem Druckspeicher (5) aufrechterhalten wird.

2. Hydrostatische Lagervorrichtung nach Anspruch 1,
**dadurch gekennzeichnet,**
**daß** die Dichtung (4) in Richtung des schneidenförmigen Kontaktbereichs (4a) vorgespannt ist.

3. Hydrostatische Lagervorrichtung nach Anspruch 1 oder 2,
**dadurch gekennzeichnet,**
**daß** der Flüssigkeitsraum (3) kreisförmig und die Dichtung (4) kreisringförmig ausgebildet sind.

4. Hydrostatische Lagervorrichtung nach einem oder mehreren der Ansprüche 1 bis 3,
**dadurch gekennzeichnet,**
**daß** außerhalb des.durch die Dichtung (4) abgesperrten Bereichs eine zusätzliche Dichtung (6) vorgesehen ist.

5. Hydrostatische Lagervorrichtung nach einem oder mehreren der Ansprüche 1 bis 4,
**dadurch gekennzeichnet,**
**daß** der Druckspeicher (5) einen vorgespannten, in einem Zylinderraum (5a) verschieblichen Kolben (5b) aufweist.

6. Hydrostatische Lagervorrichtung nach Anspruch 5,
**dadurch gekennzeichnet,**
**daß** der Kolben (5b) mittels einer Druckfeder (5c) vorgespannt ist.

7. Hydrostatische Lagervorrichtung nach einem oder mehreren der Ansprüche 1 bis 6,
**dadurch gekennzeichnet,**
**daß** eine absperrbare, zum Flüssigkeitsraum (3) führende Flüssigkeitsspeiseleitung (5e) vorgesehen ist.

## Claims

1. Hydrostatic bearing device for two machine areas (1; 1', 2) which are capable of moving relative to each other and have parallel mounted surfaces (1a; 1a'; 2a; 2a'), with a fluid chamber (3) which is defined by parts of the two different machine areas (1; 1'; 2) which form a gap (3a) wherein the fluid in the fluid chamber (3) is under pressure, and the gap (3a) between the two machine areas (1; 1', 2) is shut off by means of a seal (4) **characterised in that** the seal (4) which is connected to one machine area (1'; 1') has a knife-like contact area (4a) which adjoins the opposite surface (2a; 2a') of the other machine area (2) and the pressure is maintained in the fluid chamber (3) by a pressure reservoir (5).

2. Hydrostatic bearing device according to claim 1 **characterised in that** the seal (4) is pretensioned in the direction of the knife-like contact area (4a).

3. Hydrostatic bearing device according to claim 1 or 2 **characterised in that** the fluid chamber (3) has a circular shape and the seal (4) also has a circular shape.

4. Hydrostatic bearing device according to one or more of claims 1 to 3 **characterised in that** an additional seal (6) is provided outside of the area shut off by the seal (4).

5. Hydrostatic bearing device according to one or more of claims 1 to 4 **characterised in that** the pressure reservoir (5) has a pretensioned piston (5b) which is displaceable in a cylinder chamber (5a).

6. Hydrostatic bearing device according to claim 5 **characterised in that** the piston (5b) is pretensioned by means of a compression spring (5c).

7. Hydrostatic bearing device according to one or more of claims 1 to 6 **characterised in that** a fluid supply pipe (5e) is provided which leads to the fluid chamber (3) and which is capable of being shut off.

## Revendications

1. Dispositif de palier hydrostatique pour deux zones de machine (1; 1'; 2) relativement mobiles l'une vers l'autre, présentant des surfaces parallèles (1a; 1a'; 2a; 2a'), avec un espace pour fluide (3) qui est limité par des parties des deux différentes zones (1; 1'; 2) formant une fente (3a), le fluide étant sous pression dans l'espace (3) et la fente (3a) étant obstruée, entre les deux zones (1; 1'; 2) à l'aide d'un joint d'étanchéité (4),
**caractérisé en ce que**
le joint d'étanchéité (4), relié à une zone de machine (1, 1'), porte contre la surface opposée (2a ; 2a) de l'autre zone de machine (2) avec une zone de contact en forme de lame (4a) et que la pression est maintenue, dans l'espace contenant le fluide (3), par un accumulateur de pression (5).

2. Dispositif de palier hydrostatique selon la revendication 1,
**caractérisé en ce que**
le joint d'étanchéité (4) est précontraint dans la direction de la zone de contact en forme de lame (4a).

3. Dispositif de palier hydrostatique selon la revendication 1 ou 2,
**caractérisé en ce que**
l'espace contenant le fluide (3) est circulaire et le joint d'étanchéité (4) est conçu en forme d'anneau de cercle.

4. Dispositif de palier hydrostatique selon une ou plusieurs revendications 1 à 3,
**caractérisé en ce**
**qu'**un dispositif d'étanchéité supplémentaire (6) est prévu en dehors de la zone fermé par le joint d'étanchéité (4).

5. Dispositif de palier hydrostatique selon une ou plusieurs revendications 1 à 4,
**caractérisé en ce que**
l'accumulateur de pression (5) présente un piston (5a) précontraint qui peut être déplacé dans une espace cylindrique (5a).

6. Dispositif de palier hydrostatique selon la revendication 5,
**caractérisé en ce que**
le piston (5b) est précontraint par un ressort de pression (5c).

7. Dispositif de palier hydrostatique selon une ou plusieurs revendications 1 à 6,
**caractérisé en ce**
**qu'**une conduite d'alimentation en fluide est prévue à destination de l'espace pour fluide (3) par rapport auquel elle peut être fermée.
